# EUROPEAN PATENT APPLICATION

(11) **EP 2 105 643 A2**
(43) Date of publication of application: **30.09.2009**
(21) Application number: 09164701.6
(22) Date of filing: 06.07.2009
(51) Int. Cl.: F16L 5/02

(54) **Gas pipe slip boot**

(71) Applicant: Enviro Seal Limited, Rugby Warwickshire CV22 7DX (GB)
(72) Inventor: Harrison, Steven, Rugby, Warwickshire CV22 7EL (GB); Turney, William Edward, Skelmersdale, Lancashire WN8 6EN (GB); Brunsdon, William James, Wareham, Dorset BH20 7LP (GB)
(74) Representative: Coulson, Elizabeth Eve

(57) **Abstract**

A device (1) for providing a gas-tight connection between a gas conduit (2) and a barrier material (4) through which the gas conduit (2) passes, which device (1) comprises a body (6,8) having an interior void dimensioned to fit around the gas conduit (2) and an aperture at each end of the body (6/8) through which apertures the gas conduit (2) can slidably extend, one of which ends comprising a surface (10) for forming a gas-tight seal with a surface of the barrier material (4), the body containing at least three sealing members (14,16,18) that each contact an internal periphery of the aforesaid internal void and an external periphery of the gas conduit (2).

## Description

### Field of Invention

The present invention relates generally to the field of devices for forming seals between gas conduits and a barrier material such as sheeting, wherein the gas conduit passes through an aperture in the barrier material. More specifically, though not exclusively, the invention relates to a device for providing a gas tight seal between the gas conduit and the barrier material which permits the barrier material to move along the length of the gas conduit.

### Background to the Invention

Where there is a need to collect gas from an expanse of buried material, such as is the case when collecting methane from a land fill site, a gas pipe is inserted down a bore formed into that buried material. It is desirable that as much of the collected gas be channelled up this pipe as is possible, so that the gas may be employed for some useful purpose, such as methane being burned to generate electricity. For this reason, it is important that some means be provided for forming a gas tight barrier once a mineral or geosynthetic seal has been effected over the top of the buried material, through which seal the gas pipe must necessarily extend, thereby calling for a gas-tight seal about its perimeter.

As the buried waste sits, it begins to settle, under its own weight, thereby reducing the height of it's uppermost surface. To form an effective seal, the barrier material needs to be disposed over, and in proximity to this uppermost surface, and therefore it too will begin to descend, in response to the compression of the buried material.

Gas tight seals around pipes are known, and include, or the use of mechanical clamping systems. However, these techniques suffer from various disadvantages in land-fill applications because, as the buried waste sits, it begins to settle, under its own weight, thereby reducing the height of it's uppermost surface. To form an effective seal, the barrier material needs to be disposed over, and in proximity to this uppermost surface, and therefore it too will begin to descend, in response to the compression of the buried material.

Welded or mechanically clamped seals employed between the barrier material and the periphery of the gas pipe, would put stress upon the gas pipes and the barrier material. The latter would be effectively placed in tension from it's own weight and the weight of any sub soil or top soil layered thereover. This tension would direct stress onto the gas pipes at the locations at with the welded or mechanically clamped seals had been effected.

In order to overcome this issue, there have been devised methods that permit a gas tight seal to be formed between the barrier material, and the gas pipe, but which permit movement of the barrier material along the length of the gas pipe. One example of a gas pipe slip boot that allows this functionality comprises a tubular concertina of flexible material clamped, at one end to a perimeter of the gas pipe, and at an opposing end to a tubular channel that is fixedly sealed to the barrier material. By extension of the tubular concertina of material, the gas pipe is thus allowed, over a limited distance, to slip through the channel, and thereby to allow the channel and barrier material to move along the length of the gas pipe.

The above solution is, however, not without disadvantages. The movement of the channel down the gas pipe is limited by the maximum extension of the tubular concertina of material, for example. Furthermore , a concertina of material requires creases to be formed in that material, which creases represent high stress points that could potentially fail, leading to a breach in the gas tight seal between the channel and the gas pipe.

The present invention seeks to provide an improvement over known sealing techniques and systems.

### Summary of the Invention

A first aspect of the present invention provides a device for providing a gas-tight gas connection between a gas conduit and a barrier material through which the gas conduit passes, which device comprises a body having an interior void dimensioned to fit around the gas conduit and an aperture at each end of the body through which apertures the gas conduit can slidably extend, one of which ends comprising a surface for forming a gas-tight seal with a surface of the barrier material, the body containing at least three sealing members that each contact an internal periphery of the aforesaid internal void and an external periphery of the gas conduit.

Preferably, the aforesaid at least three sealing members define, between them, at least two chambers between the gas conduit and the body.

Preferably, the device further comprises a first and second access means for allowing access to a first and a second of the aforesaid at least two chambers respectively.

Preferably, the first and second access means are grease nipples.

Preferably, an expansive material is provided in a first of the two chambers, which expansive material fills that first chamber, thereby to create a gas-tight seal between the gas conduit and the body.

Preferably,the expansive material is hydrophilic foam.

Optionally, a lubricant is provided in a second of the aforesaid at least two chambers, which lubricant coats the external surface of the gas conduit as the gas conduit slides through the body, thereby reducing the friction between the aforesaid body and the gas conduit.

Optionally, the body further comprises, at an end adjacent that end which is to be adjacent the barrier material, a first flange that extends inwardly of the body, which flange has free terminal edge that defines an aperture, which aperture is sized to fit around the gas conduit, and thereby to act as a guide as the gas conduit slides through the aforesaid void.

Optionally, the aforesaid surface, for forming a gas-tight seal with a surface of the barrier material, comprises a second flange that extends outwardly from an exterior surface of the body.

Optionally, one or more of:
a. the body; and
b. the surface for forming a gas-tight seal with a surface of the barrier material; and
c. the second flange, when present;
are formed integrally with one another.

Preferebaly, the first part provides a rigid structure that resists warping in the presence of layers of soil disposed therearound, thereby to prevent warping of the ends of the slip boot and contact between an interior surface of the slip boot and the gas conduit, which contact would lead to increased friction between the two and therefore hamper the sliding of the gas conduit through the slip boot.

A second aspect of the present invention provides a kit of parts for forming a device for providing a gas-tight gas connection between a gas conduit and a barrier material, the kit comprising a body having an interior void dimensioned to fit around the gas conduit and an aperture at each end of the body through which apertures the gas conduit can slidably extend, one of which ends comprising a surface for forming a gas-tight seal with a surface of the barrier material, the kit further comprising at least three sealing members that are mountable within the body in contact an internal periphery of the aforesaid internal void and an external periphery of the gas conduit.

Preferably, the kit further comprises an expansive material, and a lubricant.

A third aspect of the present invention provides a method of forming a gas tight seal between a gas conduit and a barrier material through which the gas conduit passes that allows the barrier material to slide down the length of the gas conduit, which method comprises providing a device having a body, which body has an interior void dimensioned to fit around the gas conduit and an aperture at each end of the body through which apertures the gas conduit can slidably extend, one of which ends comprising a surface for forming a gas-tight seal with a surface of the barrier material, the kit further comprising at least three sealing members that are mountable within the body in contact an internal periphery of the aforesaid internal void and an external periphery of the gas conduit, the method further comprising making a gas-tight seal between the aforesaid surface of the body and the barrier material, and passing the gas conduit through the body of the device, through the sealing members thereof, and through an aperture formed in the barrier material.

### Brief Description of the Figures

Preferred embodiments of the present invention will now be described with reference to the accompanying drawings, in which:
Figure 1 illustrates an elevated view of a gas pipe slip boot according to the present invention; and
Figure 2 illustrates a cross-sectional view of the gas pipe slip boot of Figure 1 shown through the line X-X.

### Detailed Description of Specific Embodiments

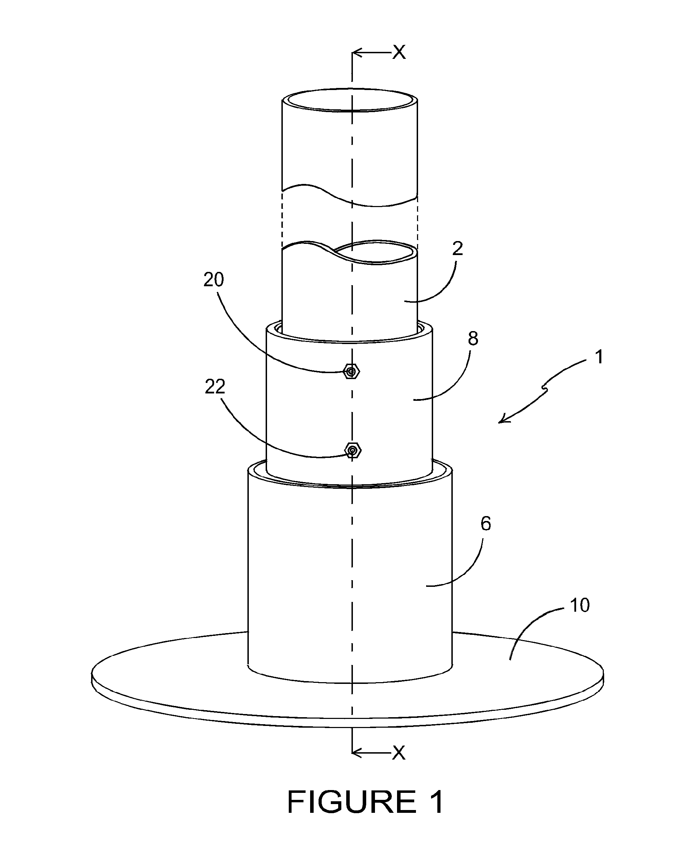

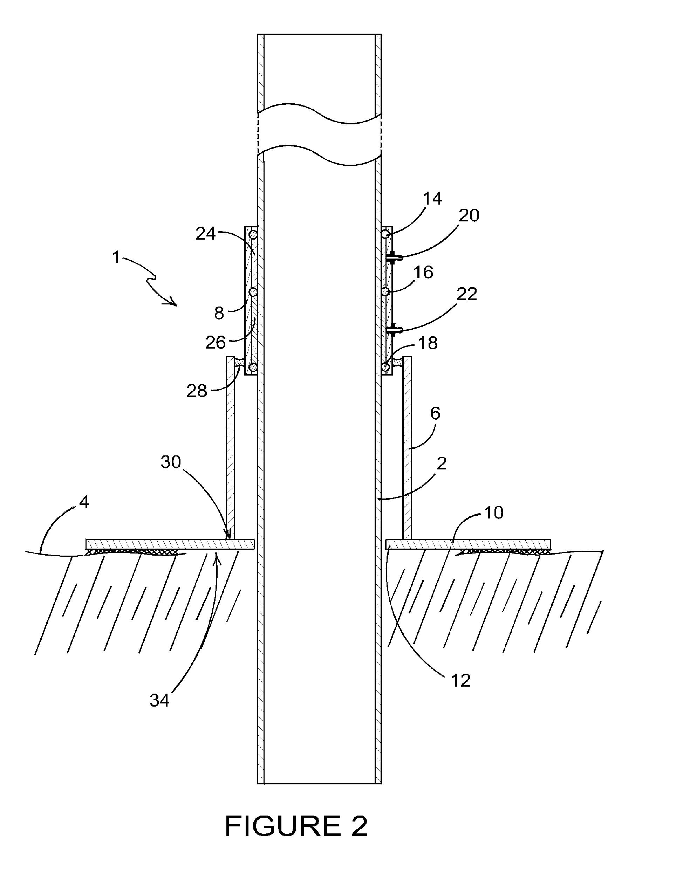

As is shown in Figures 1 and 2, the present invention provides a gas pipe slip boot, for creating a gas tight seal between a gas conduit, such as a gas pipe 2 and a barrier material 4. In the exemplary embodiment, this barrier material 4 is a sheet that is used to cap-off the top of a land-fill site. Necessarily, the barrier material 4 must have formed therein an aperture through which the gas pipe 2 may extend, such that the gas pipe 2 may be suitably positioned within a bore in the land-fill material.

The slip boot has a body comprised of two parts: a first part 6 that is tubular and has a first diameter, and a second part 8 that is also tubular and that has a slightly smaller diameter than the first part 6. The second part 8 thus may locate within the first part 6, and is positionable within an end thereof, so as to extend out from that end, beyond the first part 6 (as shown in the Figures). The first 6 and second 8 parts are coupled or secured together by means, such as welding, mechanical clamping or chemical adhesion at a peripheral point 28, so that affixing the two parts 6, 8 forms a continuous tubular member. Preferably, the two parts 6, 8 share a central longitudinal axis, in other embodiments, however, they do not.

Extending outwardly from an external surface of the first part 6, at an end 30 distal from the second part 8, is a first radial flange 10. That end of the first part 6 also has a second radial flange 12 that extends inwardly of the first part 6, towards the gas pipe 2. In another embodiment, the two flanges 10, 12 are formed of a single piece of material which is then affixed, optionally by being welded, to the end of the first part 6.

The purpose of the first radial flange 10 is to offer a surface that can be positioned over the barrier material 4, and which then allows the first part 6 to be secured to that barrier material 4. That may be achieved in any of numerous manners known in the art, including welding and chemical adhesion amongst others. The securement should also be gas-tight to prevent leakage of gas from beneath the barrier material 4 up through the aperture 34 in the barrier material 4 and out to the atmosphere through any gaps in the securement with the first part 6. Therefore, the securement should extend all the way around the perimeter of an aperture 34 in the barrier material 4, so as to ensure a continuous seal. In the illustrated embodiment, the lowermost surface of the first flange 10 may form the surface for securement with the barrier material 4 However, in alternative embodiments, the uppermost surface of the first flange 10 forms the surface for securement with the barrier material 4.

The second flange 12 is provided to act as a guide for the gas pipe 2 when it is positioned within the slip boot, and shall be discussed in greater detail below.

Secured to the inner surface of the second part 8 are three sealing members that contact an external surface of the gas pipe 2 and an internal surface of the slip boot 1. In the illustrated embodiment, the sealing members are "O" rings 14, 16, 18, each of which are secured in a desired peripheral position. Preferably, the inner surface of the second part 8 comprises three channels defined therein; one for each of the "O" rings 14, 16, 18. These channels accommodate the bodies of the "0" rings 14, 16, 18 and prevent them from moving relative to the second part 8. The internal diameter of the three "O" rings 14, 16, 18 is preferably slightly smaller than the external diameter of the gas pipe 2 so as to form a good seal therearound when the gas pipe 2 is inserted into the slip boot. The "O" rings 14, 16, 18 thus sit, disposed around the radial periphery of the inside of the second part 8, and contact the external surface of the gas pipe 2, thereby forming a seal therebetween.

Defined in the external surface of the second part 8 that extends outwardly of the first part 6 are two access points 20, 22. The first of these access point 20 is defined towards top of the second part 8, in a position along a longitudinal axis of that part 8 which falls between the positions of the top two "O" rings 14, 16. This access point 20 is sealable after use and, preferably allows subsequent access and resealing. To achieve this, the access point 20 comprises a grease nipple. In other embodiments the access means does not allow for subsequent access and re-sealing. The access point may be releasably engaged with the second part 6, by a threaded connection for example. This means that, should subsequent access not be desired, the access point can be removed and replaced with a capping member to permanently seal off access therethrough.

The second of the access points 22 is defined beneath the first access point on the second part 8, and is defined at a position along the longitudinal access of the second part 8 between the corresponding positions of the bottom two "O" rings 16, 18. Preferably, the second access point 22 has the same functionality as the first access point 20, although is other embodiments that is not the case.

Thus, it is contemplated that the first access means 20 may permit subsequent access and re-sealing whilst the second access mean 22 does not, or vice versa. Alternatively both, or neither of the first and second access means 22, 22 are capable of subsequent access and re-sealing.

The slip boot 1 is located around the top of a gas pipe 2. The gas pipe 2 is located in a bore formed in the material (such as the land fill waste) beneath the barrier material 4, and the gas pipe 2 extends through the aperture 34 defined, in the barrier material 4, over that bore. The slip boot 1 is then slid down the length of the gas pipe 2, thereby compressing the "O" rings 14, 16, 18 as necessary between the outer surface of the gas pipe 2 and the inner surface of the second part 6 as it is so inserted. A terminal free edge of the second flange 12 defines an aperture in the end of the first part 6, which free edge acts as a guiding surface to maintain the slip boot 1 in substantially co-axial orientation with the gas pipe 2.

The slip boot 1 is thereby brought down the length of the gas pipe 2 to a position at which is it to be secured to the barrier material 4, around the aperture 34 defined therein. The application of the slip boot 1 requires a gas tight securement of the contacting surfaces of the slip boot 1 and barrier material 4. In practice this may require, as is illustrated in Figure 2, the lowermost surface of the flange 10 being welding to the upper surface of the barrier material 4 with which the flange 10 is in contact.

An alternative method of securing the slip boot 1 to the barrier material 4 is to provide a collar of barrier material 4 that is applied around the slip boot 1. The collar (not shown in the Figures) has a central aperture that accepts the gas pipe 2 and the internal thickness of the slip boot 1. The collar comes to rest over uppermost portions of the flange 10, to which it is affixed by means such as welding, mechaniocal fastening or chemical adhesion. The collar preferably also covers adjacent portions of the barrier material 4 and is preferably affixed to those adjacent portions, again by welding, mechanical fastening or chemical adhesion.

Once the slip boot 1 is affixed to the barrier material 4, the first access point 20 is used to allow access to a first chamber formed between the interior surface of the second part 8 and the external surfaces of the gas pipe 2, bounded at opposing ends by the top two "O" rings 14, 16 respectively. Once access is gained, an expansive material is injected into that chamber, thereby filling the first chamber. This expansive material may take the form of hydrophilic foam 24 that reacts with water to increase in volume, and thereby forms a gas tight seal between the interior surface of the second part 8 and the exterior surface of the gas pipe 2. It is contemplated that other materials may also be used in this chamber to create such a seal, such expanding foam, or pastes, liquids, resins and mastics of hydrophilic or sodium bentonite based materials, or any other expansive mineral or compound, capable of injection, which would expand is the presence of water to create an impervious barrier. Thus, this first chamber provides a means of locating an adaptive sealing material, which sealing material will adapt, should the gas pipe 2 warp under pressures places upon it by the material around it, by expanding in the presence of water so as to maintain a good seal witht eh gas pipe 2 even when the "O" rings 14, 16, 18 themselves are not able to maintain the seals themselves. The "O" rings separate the first and second chambers effectively to maintain the two volumes separate from one another, and thereby to prevent contamination of the first chamber (or vice versa).

The second access point 22 is then used to allow access to a second chamber formed between the interior surface of the second part 8 and the external surface of the gas pipe 2, bounded at opposing ends by the lower two "O" rings 16, 18 respectively. Once access is gained, the user may then inject a lubricant, such as grease, into that chamber, thereby filling the chamber. This lubricant will then sit in this chamber, and coat the exterior surface of the gas pipe 2 forming the chamber. By providing the third "O" ring 18, the slip boot 1 provides a means by which a reservoir of lubricant may be maintained in contact with the gas pipe 2, which lubricant will be dispensed along the surface fo the gas pipe 2 as required.

In use, once the slip boot 1 has been installed and the gas pipe 2 inserted, the assembly will be fully operational to conduct gas from beneath the barrier material 4, up the gas pipe 2, to an outlet point (such as a methane burner connected to the end of the gas pipe 2).

As the material beneath the barrier material 4 begins to compress and thus reduce in volume, the barrier material 4 will sink down with the adjacent surface of that material. The weight of the barrier material 4, along with the weight of overlying sub soil and top soil that will have been layered thereupon will overcome the friction between the "O" rings 14, 16, 18 and the gas pipe 2, thereby allowing the barrier material 4 and slip boot 1 to slide down the gas pipe 2 and thus provide a moveable gas-tight seal.

*It can be appreciated that various changes may be made within the scope of the present invention, for example, the size and shape of the parts and the apertures may be adjusted. In other embodiments of the invention it is envisaged that* the internal 12 and external 10 radial flanges extending from the lower end of the first part 6 may be integrally formed with the first part 6, by perhaps a one-piece molding, or by machining a single block of material. Alternatively, these flanges 10, 12 may be separate components that are bonded to the lower edge of the first part 6 by some means, such as welding, a mechanical fastening, or by a chemical bond.

It is also envisaged that the cross section of the slip boot 1 may by any possible shape that can accept a gas connection there -through. A square cross section would be used, for example, where the cross section of the gas conduit is square. In such embodiments, the sealing members are shaped accordingly, so that they contact the interios surface fo the second part 8, and the exterior surface of the gas pipe 2. Where the crosss section of these two surfaces differ in shape, such as where the slip boot 1 is square whilst the gas pipe 2 is tubular, the sealing members are shaped accordingly to correspond to the differing geometry of both surfaces.

The first and second access means are envisaged to be, include grease nipples and releasable access plates.

The materials from which the first part 6, second part 8 and flanges 10, 12 are formed are not limiting features of the invention, but may include, amongst others Polyethylene, Polypropylene, PVC, any Polymeric Material, GRP or Steel. Optionally, one or more of the first part, second part and flanges are formed of different materials to one another. Optionally, the flanges are formed of a resilient material to conform to the contours of the barrier material.

In the illustrated embodiment, the sealing members each form a gas-tight seal between the such of the slip boot 1 and the gas pipe 2, and thereby also form a gas tight separation between the first chamber 24 and the second chamber 26. It is, however, envisaged, that in alternative embodiments, the sealing members defining these two chambers 24, 26 do not form a gas tight seal between the slip boot 1 and the gas pipe 2, or, alternatively, that the two chamber 24, 26 do not have a gas tight seal between them.

The sealing members, such as the "O" rings 14, 16, 18, are preferably formed from a resiliently deformable material such as rubber, though may also be formed from Plastics, Cork, Silicone, Hydrophilic material / resin or Sodium Bentonite based materials.

In the illustrated embodiment, the access means 20, 22 to the chambers formed between the "O" rings 14, 16, 18 are "grease nipples". These grease nipples are known in the art, but briefly stated, they comprise a body that has a gas connection between two ends thereof, which gas connection is interrupted by the presence of a sprung-loaded ball. When this ball is in a rest state, it prevent gas communication between the two ends of the body, but when an external pressue on the ball overcome the biasing of the spring, the ball is moved to a second position, thereby allowing gas communication to begin. In use in the present invention, the injection of the expansive material or the lubricant would be accomplished using a pressurised feed line, wherein the pressure is sufficient to so-move the steel ball and thereby to allow gas communication into the respective chamber.

References above to "gas tight" relates to a minimised leakage of cas, such that the majority of the gas is channelled in the desired manner, and does not rule out insignificant gas leakage. Similarly, references to an "impervious barrier" above are intended to indicate a level of imperviousness that prevent substantially leakage and does not rule out microscopic or otherwise insignificant loss of gas through the material in question.

In the above, "gas conduit" is used to denote a channel that is suitable for directing a flow of gas with significant loss thereof. It is also envisaged that the term "gas conduit" includes "fluidic conduit".

It will be recognised that as used herein, directional references such as "top", "bottom", "front", "back", "end", "side", "inner", "outer", "upper" and "lower" do not limit the respective features to such orientation, but merely serve to distinguish these panels from one another.

## Claims

1. A device for providing a gas-tight gas connection between a gas conduit (2) and a barrier material (4) through which the gas conduit (2) passes, which device comprises a body (6,8) having an interior void dimensioned to fit around the gas conduit (2) and an aperture at each end of the body through which apertures the gas conduit (2) can slidably extend, one of which ends comprising a surface (10) for forming a gas-tight seal with a surface of the barrier material (4), the body containing at least three sealing members (14, 16, 18) that each contact an internal periphery of the aforesaid internal void and an external periphery of the gas conduit (2).

2. The device according to claim 1, wherein the at least three sealing members (14, 16, 18) define, between them, at least two chambers (24, 26) between the gas conduit (2) and the body (1).

3. The device according to claim 2 further comprising a first (20) and second (22) access means for allowing access to a first (24) and a second (26) of the aforesaid at least two chambers respectively.

4. The device according to claim 3 wherein the first (20) and second (22) access means are grease nipples.

5. The device according to claims 2 to 4 wherein an expansive material is provided in a first (24) of the two chambers, which expansive material fills that first chamber (24), thereby to create a gas-tight seal between the gas conduit (2) and the body (6,8).

6. The device according to claim 5, wherein the expansive material is a hydrophilic foam.

7. The device according to any of claims 2 to 6, wherein a lubricant is provided in a second (26) of the aforesaid at least two chambers (24, 26), which lubricant coats the external surface of the gas conduit (2) as the gas conduit (2) slides through the body (6,8), thereby reducing the friction between the aforesaid body (6,8) and the gas conduit (2).

8. The device according to any preceding claim, wherein the body (6,8) further comprises, at an end adjacent that end which is to be adjacent the barrier material, a first flange (12) that extends inwardly of the body (6,8), which flange has free terminal edge that defines an aperture, which aperture is sized to fit around the gas conduit (2), and which edge thereby acts as a guide as the gas conduit (2) slides through the aforesaid void.

9. The device according to any preceding claim, wherein the aforesaid surface (10), for forming a gas-tight seal with a surface of the barrier material (4), comprises a second flange that extends outwardly from an exterior surface of the body.

10. The device according to any preceding claim wherein one or more of:
a. the body (6,8); and
b. the surface (10) for forming a gas-tight seal with a surface of the barrier material (4); and
c. the second flange (12), when present;
are formed integrally with one another.

11. The device according to any preceding claim wherein the body (6,8) provides a rigid structure (6) that resists warping in the presence of layers of soil disposed therearound, thereby to prevent warping of the ends of the device (1) and contact between an interior surface of the device (1) and the gas conduit (2), which contact would lead to increased friction between the two and therefore hamper the sliding of the gas conduit (2) through the device (1).

12. A kit of parts for a device for providing a gas-tight gas connection between a gas conduit (2) and a barrier material (4), the kit comprising a body (6,8) having an interior void dimensioned to fit around the gas conduit (2) and an aperture at each end of the body through which apertures the gas conduit (2) can slidably extend, one of which ends comprising a surface (10) for forming a gas-tight seal with a surface of the barrier material (4), the kit further comprising at least three sealing members (14, 16, 18) that are mountable within the body in contact an internal periphery of the aforesaid internal void and an external periphery of the gas conduit (2).

13. A kit according to claim 12 further comprising an expansive material, and a lubricant.

14. A method of forming a gas tight seal between a gas conduit (2) and a barrier material (4) through which the gas conduit (2) passes that allows the barrier material (4) to slide down the length of the gas conduit, which method comprises providing a device (1) having a body (6,8), which body (6,8) has an interior void dimensioned to fit around the gas conduit (2) and an aperture at each end of the body through which apertures the gas conduit (2) can slidably extend, one of which ends comprising a surface for forming a gas-tight seal with a surface of the barrier material (4), the device (1) further comprising at least three sealing members (14, 16, 18) that are mountable within the body (6,8) in contact an internal periphery of the aforesaid internal void and an external periphery of the gas conduit, the method further comprising making a gas-tight seal between the aforesaid surface (10) of the body and the barrier material (4), and passing the gas conduit (2) through the body (6,8) of the device (1), through the sealing members (14, 16, 18) thereof, and through an aperture (34)formed in the barrier material (4).
